# EUROPÄISCHE PATENTSCHRIFT

(11) **EP 2 679 339 B1**
(45) Veröffentlichungstag und Bekanntmachung des Hinweises auf die Patenterteilung: **09.09.2015**
(21) Anmeldenummer: 13173770.2
(22) Anmeldetag: 26.06.2013
(51) Int. Cl.: B23Q 17/24, G01B 9/00

(54) **Vorrichtung zur Abbildung und Überprüfung eines Fräsprofils sowie Verfahren zum Bestimmen von Korrekturwerten für Werkzeugpositionen bei einem Fräsvorgang**
Device for imaging and monitoring a milling profile and method for determining correction values for tool positions in a milling process
Dispositif de représentation et de vérification d'un profil de fraisage et procédé de détermination de valeurs de correction pour des positions d'outil lors d'un processus de fraisage

(30) Priorität: 26.06.2012 DE 202012102352 U
(43) Veröffentlichungstag der Anmeldung: 01.01.2014
(73) Patentinhaber: PREWI Schneidwerkzeuge GmbH, 32052 Herford (DE)
(72) Erfinder: Prekwinkel, Axel, 32049 Herford (DE)
(74) Vertreter: Kleine, Hubertus

(56) Entgegenhaltungen:
- EP-A1- 1 586 413
- EP-A2- 0 985 493
- US-A1- 2006 251 484

## Beschreibung

Die Erfindung betrifft eine Vorrichtung zur Abbildung und Überprüfung eines Fräsprofils, insbesondere von Fußbodendielen. Die Erfindung betrifft weiterhin ein Verfahren zum Bestimmen von Korrekturwerten für Werkzeugpositionen bei einem Fräsvorgang.

Fußbodendielen werden häufig entlang ihrer Kanten mit miteinander zusammen wirkenden Profilen versehen. Insbesondere bei Laminatböden wird dabei inzwischen eine relativ komplexe Profilierung eingesetzt, die eine nahezu fugenlose Verbindung benachbarter Dielen zueinander und so eine einfache und weitestgehend werkzeuglose Verlegung ermöglicht. Um dieses zu erreichen, muss die Profilierung mit hoher Genauigkeit ausgeführt sein. Zu diesem Zweck wird üblicherweise ein Abschnitt einer bearbeiteten Diele unter einem Mikroskop begutachtet und vermessen. Die an der Erstellung der Profilierung beteiligten Werkzeuge der Bearbeitungsmaschine werden bezüglich ihrer Position und Ausrichtung so lange verändert, bis die Profilierung die gewünschten Maße aufweist. Dieses Verfahren ist aufwendig und mit langen Produktionsstillstandszeiten der Bearbeitungsmaschine verbunden.

Aus der Druckschrift EP 1 586 413 A1 ist eine Messeinrichtung zum Vermessen von Werkzeugen bekannt, bei denen zur Vermessung einer Oberfläche des Werkzeugs dieses mit einer Auflichtquelle und zur Vermessung von Kanten des Werkzeugs dieses mit einer Hintergrund-Beleuchtungseinrichtung im Gegenlicht beleuchtet wird. Ein Durchlicht-Auflichtmesssystem, das in eine Werkzeugmaschine, integriert ist, wird in der Druckschrift EP 0 985 493 A2 beschrieben. Hier dient das Messsystem der Erfassung von bearbeiteten Flächen bzw. Kanten während des Bearbeitungsprozesses. Es ist eine Aufgabe der vorliegenden Erfindung, eine Vorrichtung der eingangs genannten Art zu schaffen, die eine schnelle Überprüfung eines Fräsprofils ermöglicht. Es ist eine weitere Aufgabe, ein Verfahren anzugeben, mit dem Korrekturwerte für Werkzeugpositionen bei einem Fräsvorgang einfach, schnell und zuverlässig bestimmt werden können.

Diese Aufgabe wird gelöst durch eine Vorrichtung und Verfahren mit den jeweiligen Merkmalen der unabhängigen Ansprüche. Vorteilhafte Weiterbildungen und Ausgestaltungen sind jeweils Gegenstand der abhängigen Ansprüche.

Die Erfindung wird nachfolgend anhand eines Ausführungsbeispiels mithilfe von vier Figuren näher erläutert. Es zeigen:
- Fig. 1: eine schematische perspektivische Darstellung einer Vorrichtung zur Abbildung und Überprüfung eines Fräsprofils;
- Fig. 2: eine schematische Darstellung einer Bildschirmausgabe der in der Fig. 1 gezeigten Vorrichtung und
- Fig. 3, 4: schematische Darstellungen von Werkzeug- und Werkstückkonturen zur Erläuterung eines anmeldungsgemäßen Verfahrens.

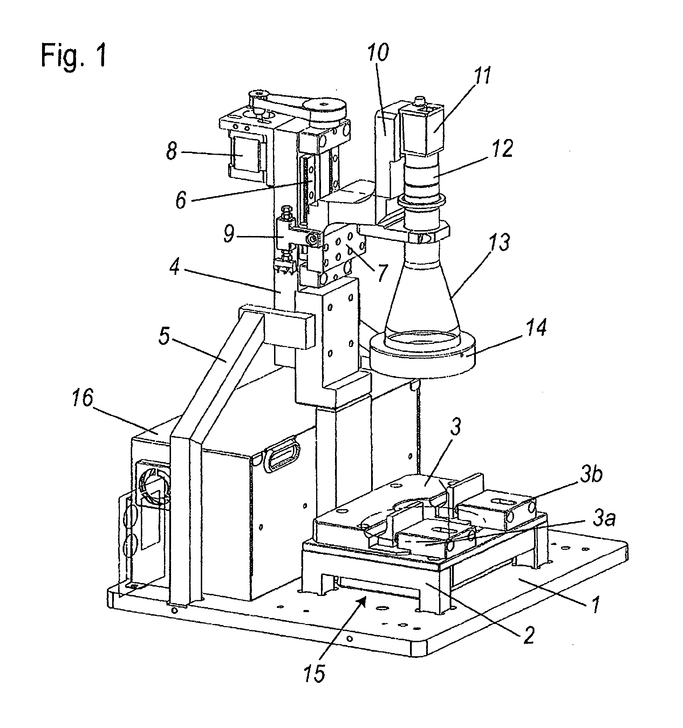

Fig. 1 zeigt in einer schematischen perspektivischen Darstellung eine Vorrichtung zur Abbildung und Überprüfung eines Fräsprofils. Um den inneren Aufbau der Vorrichtung besser darstellen zu können, ist ein zumindest den oberen Teil der Vorrichtung im normalen Betrieb abdeckendes Gehäuse in dieser Figur nicht dargestellt.

Die Vorrichtung weist eine Grundplatte 1 auf, auf der ein Probentisch 2 als Probenaufnahme im vorderen Bereich montiert ist. Der Probentisch 2 umfasst an seiner Oberseite eine Anordnung von drei Klemmbacken 3, 3a, 3b, von denen die Klemmbacke 3 im hinteren Bereich des Probentisches 2 über seine im Wesentlichen gesamte Breite ausgeführt ist. Der Klemmbacke 3 gegenüber sind zwei kleinere Klemmbacken 3a, 3b jeweils im äußeren Bereich des Probentisches 2 angeordnet, die federbeaufschlagt gegen die hintere Klemmbacke 3 drücken. Die Anordnung der Klemmbacken 3, 3a, 3b ermöglicht es, von jeder der beiden Seiten einen Probenabschnitt eines Werkstücks auf einfache und schnelle Weise und gleichwohl mit definierten Anlagekanten in einem Beobachtungsbereich, der in etwa in der Mitte des Probentisches 2 liegt, zu fixieren.

Hinter dem Probentisch 2 ist auf der Grundplatte 1 eine Säule 4 montiert, die zur Stabilisierung von seitlichen Streben 5 abgestützt wird. Im oberen Bereich der Säule 4 ist eine Vertikalführung 6 ausgebildet, in der ein Schlitten 7 vertikal verfahren werden kann. Die Führung 6 ist mit einem Motor 8 gekoppelt, wie dargestellt beispielsweise über einen Zahnriemen und einen Spindelantrieb. Über den Motor 8 kann der Schlitten 7 präzise in seiner vertikalen Position entlang der Säule 4 verfahren werden. An der Säule 4 ist einer oder sind mehrere Endschalter 9 angeordnet, die von dem Schlitten 7 betätigt werden. In einem Initialisierungsschritt kann diese Position des Endschalters 9 mit dem Schlitten 7 angefahren werden, um Informationen über die absolute Position des Schlittens 7 auf der Vertikalführung 6 zu erhalten. Nachfolgend kann die Bewegung des Schlittens 7 über einen am Motor 8 angeordneten Drehimpulsgeber verfolgt werden. Wenn der Motor 8 ein Schrittmotor ist, ist auch ohne Drehimpulsgeber die aktuelle Position des Schlittens 7 im Weiteren bekannt, nachdem einmalig der Endschalter 9 angefahren wurde.

Am Schlitten 7 ist ein Ausleger 10 angeordnet, der eine Kamera 11 trägt. Die Kamera kann beispielsweise als eine CCD (Charge-Coupled Device)-Kamera ausgebildet sein. Die Kamera ist mit einem Objektiv 12 versehen, das auf den Probenbereich auf dem Probentisch 2 ausgerichtet ist.

Vor dem Objektiv 12 ist ein ebenfalls am Ausleger 10 befestigter Trichter 13 angeordnet, der zum Einen einen seitlichen Lichteinfall in das Objektiv 12 verhindert und zum Anderen an seinem unteren, offenen Ende eine ringförmige Auflichtquelle 14 trägt. Diese Auflichtquelle 14 weist beispielsweise eine Mehrzahl von ringförmig angeordneten weißen Leuchtdioden (LEDs - Light-Emitting Diodes) auf, die auf den Probentisch 2 ausgerichtet sind. In den Probentisch 2 integriert ist zudem eine Gegenlichtquelle 15, die beispielsweise eine matte, z.B. satinierte Glasscheibe aufweist, die von einer Mehrzahl von unterhalb der Glasscheibe angeordneten LEDs beleuchtet wird. Diese LEDs sind monochromatische, beispielsweise rote Leuchtdioden.

Die Vorrichtung umfasst weiterhin eine Steuereinrichtung 16, die Komponenten zur Steuerung des Motors 8, der Kamera 11 sowie der Auflichtquelle 14 und der Gegenlichtquelle 15 umfasst. Die Steuereinrichtung 16 kann zudem eine Bild- und Datenverarbeitungseinrichtung zur Verarbeitung der von der Kamera 11 gelieferten Bilddaten beinhalten. Alternativ kann vorgesehen sein, die Bild- und Datenverarbeitungsvorrichtung in Form eines externen Gerätes, beispielsweise eines tragbaren Computers, bereitzustellen, wobei dieser externe Computer dann mit der Steuereinheit 16 und/oder der Kamera 11 verbunden ist. Falls die Bild- und Datenverarbeitungsvorrichtung zur innerhalb der Steuereinrichtung 16 angeordnet ist, weist diese eine Schnittstelle zur Verbindung mit einem Bildschirm auf.

Im Betrieb der Vorrichtung der Fig. 1 kann wie bereits geschildert ein Abschnitt eines Werkstücks zwischen die Klammern 3 und 3a bzw. 3b auf dem Probentisch eingespannt werden. Beispielhaft wird die Funktion der Vorrichtung im Folgenden anhand der Profilierung von Fußbodendielen erläutert. Es wird dementsprechend ein quer zur Fußbodendiele geschnittener Abschnitt der Fußbodendiele als Probe eingesetzt.

Dann wird unter Verwendung der Auflichtquelle 14 zunächst die zur Kamera hinweisende Oberfläche der Probe abgebildet und auf einem in der Fig. 1 nicht dargestellten Bildschirm wiedergegeben. Zu diesem Zweck kann die Vorrichtung einer Autofokussiereinrichtung aufweisen. Beispielsweise kann als Objektiv 12 ein Objektiv mit festem Fokusabstand eingesetzt werden und eine Fokussierung der Probenoberfläche dadurch erfolgen, dass die Kamera 11 durch ein Verfahren des Schlittens 7 bzgl. ihres Abstands zur Probe variiert wird. Mit bekannten Algorithmen zum Erkennen einer Scharfeinstellung bei dem aufgenommenen Bild der Kamera 11 kann die Kamera 11 dann in den bekannten festen Fokussierabstand zur Probenoberfläche gebracht werden.

Unter der Annahme, dass die Probe auf der Oberfläche des Probentisches 2 aufliegt, kann aus dem gemessenen Abstand der Kamera 11 von der Probenoberfläche auf diese Weise automatisch auch die Probendicke ermittelt werden.

Das Abbild der Probenoberfläche ermöglicht eine Begutachtung der Oberflächenbeschaffenheit der Probe und der Fräsqualität, insbesondere da Ausfransungen oder ähnliche Bearbeitungsdefekte in dieser Darstellung gut sichtbar sind. Auch kann sofort erkannt werden, ob die Probe verkantet in die Klemmbacken 3, 3a, 3b eingespannt ist.

Für die nachfolgende Abbildung des Fräsprofils wird die Vorrichtung bevorzugt mit der Gegenlichtquelle 15 anstelle der Auflichtquelle 14 betrieben. In dieser Darstellung kann die äußere Kontur, die die Profilierung wiedergibt, besonders gut erkannt werden. Auf der profilierten Oberfläche sitzende Staubpartikel, Fusseln, Ausfransungen usw. werden aufgrund des Gegenlichts der Gegenlichtquelle 15 von diesem überblendet und sind somit in der Darstellung nicht sichtbar. Auch die Probenoberfläche ist nicht mehr sichtbar, wodurch eine fehlerhafte Interpretation von Mustern auf dieser Oberfläche als Teil des Profils unterbunden ist. Muster auf der Oberfläche können bei Fußbodendielen beispielsweise durch den Schichtaufbau bei einer Laminatstruktur oder durch Maserungen von Holzschichten innerhalb der Fußbodendiele herrühren.

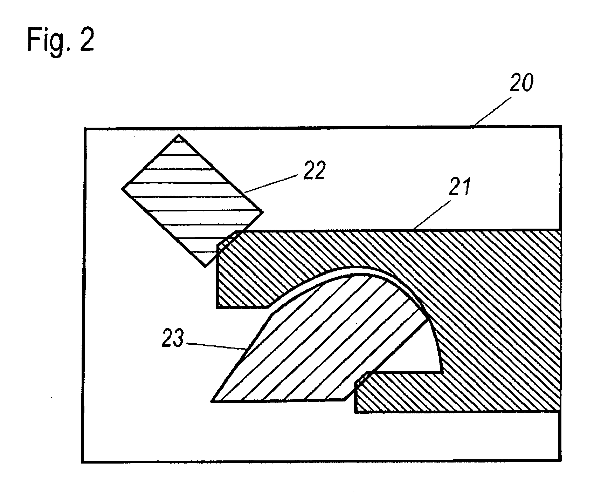

Fig. 2 zeigt schematisch, wie eine Vorrichtung gemäß Fig. 1 die Abbildung einer Probe in einem Ausführungsbeispiel auf einem Bildschirm 20 wiedergibt. Es ist zum Einen das im Gegenlicht unter Benutzung der Gegenlichtquelle 15 gemessene Profil 21 einer Probe dargestellt. Zudem sind die Profile oder Silhouetten 22, 23 von hier beispielhaft zwei von ggf. mehreren Bearbeitungswerkzeugen wiedergegeben.

Die Silhouetten 22, 23 sind dabei einer Datenbank entnommen, die in der Steuereinrichtung 16 oder der mit der Vorrichtung verbundenen Bild- und Datenverarbeitungseinrichtung abgelegt sind. Weiter sind in dieser oder einer weiteren Datenbank die aktuell in der Bearbeitungsmaschine eingestellten Positionen und Ausrichtungen der Bearbeitungswerkzeuge gespeichert. Mithilfe dieser Informationen werden die Silhouetten 22, 23 entsprechend positioniert und gedreht auf dem Bildschirm 20 wiedergegeben. Bei korrekter Einstellung der Bearbeitungswerkzeuge geben die Konturen der Silhouetten 22, 23 zusammen mit den entsprechenden Konturen weiterer, hier nicht dargestellter Bearbeitungswerkzeuge gerade das gewünschte Profil wieder. Entsprechend müssten die Konturen der Silhouetten 22, 23 der Bearbeitungswerkzeuge mit den Außenkanten des gemessenen Profils 21 übereinstimmen. Abweichungen deuten auf ein nicht korrekt eingespanntes oder nicht korrekt positioniertes Bearbeitungswerkzeug in der Bearbeitungsmaschine hin.

Die Vorrichtung ist nun so eingerichtet, dass die Position der Silhouetten 22, 23 der Bearbeitungswerkzeuge manuell gegenüber den abgespeicherten und anfangs dargestellten Positionen und Ausrichtungen verschoben bzw. gedreht werden kann. Dieses kann vom Benutzer sukzessiv für alle beteiligten Bearbeitungswerkzeuge manuell vorgenommen werden. Der Benutzer verschiebt bzw. dreht dabei die Silhouetten 22, 23 so, dass ihre Außenkonturen möglichst passend zu den Außenkonturen des gemessenen Profils 21 sind. Die dafür notwendige Bewegung und/oder Drehung der Silhouetten 22, 23 wird aufgezeichnet und kann als Datensatz oder über einen Drucker in Papierform ausgegeben werden. Die Werte werden dabei bevorzugt umgerechnet in den Maßeinheiten ausgegeben, die auch in der Bearbeitungsmaschine verwendet werden.

Die Werte können anschließend mit umgekehrten Vorzeichen unmittelbar zur Korrektur der Position der Werkzeuge in der Bearbeitungsmaschine verwendet werden. "Umgekehrtes Vorzeichen" bedeutet in diesem Zusammenhang, dass ein Werkzeug, dessen Silhouette beispielsweise auf das gemessene Profil 21 zu bewegt werden muss, um Übereinstimmung der Konturen zu erzielen, in der Bearbeitungsmaschine von dem zu bearbeitenden Werkstück um den entsprechenden Abstandswert wegbewegt werden muss. Wird mit den korrigierten Werkzeugpositionen eine weitere Probe erstellt, sollte diese in einem nächsten Messschritt in der erfindungsgemäßen Vorrichtung bereits eine gute Übereinstimmung zwischen den Außenkonturen des gemessenen Profils und den Außenkonturen der Werkzeuge in der gespeicherten Sollposition zeigen.

Durch die erfindungsgemäße Vorrichtung kann somit mit geringem Zeit- und Materialaufwand ein Fräsprofil nicht nur vermessen werden, sondern es kann so auch die Einstellung der Bearbeitungsmaschine leichter korrigiert werden, dass ein nachfolgender Fräsvorgang die gewünschte Profilierung aufweist.

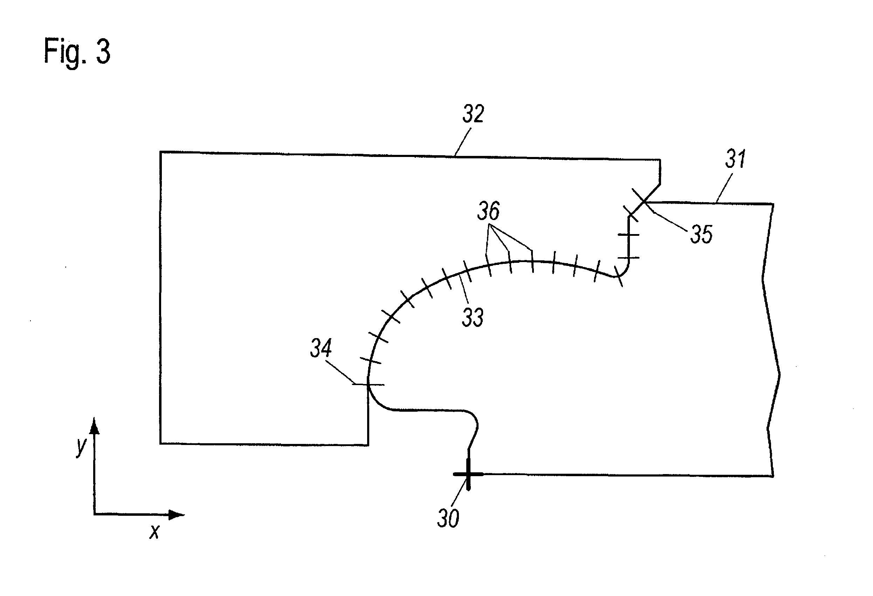

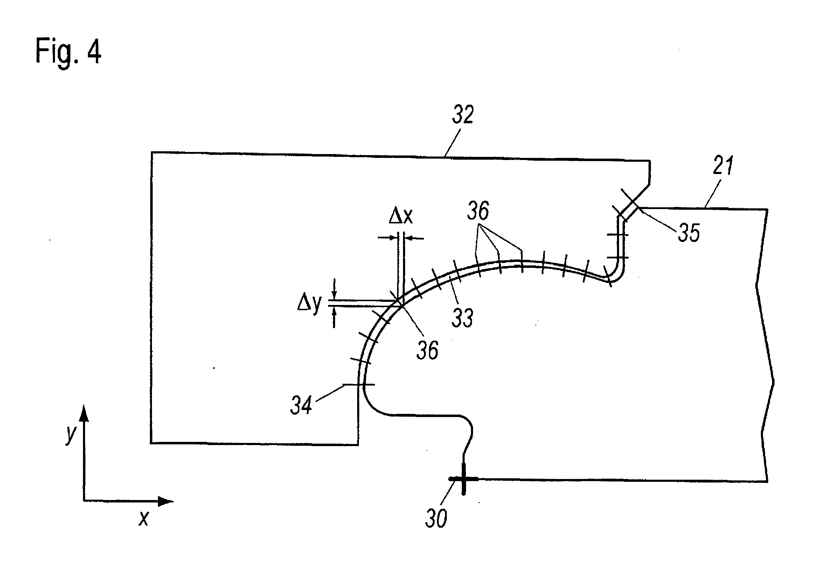

In einer vorteilhaften Weiterbildung der Vorrichtung erfolgt die Bestimmung der Korrektureinstellungen der Bearbeitungsmaschine automatisch. Ein entsprechendes Verfahren wird nachfolgend mithilfe der Fig. 3 und 4 näher erläutert. Für das Verfahren wird eine qualitativ hochwertige Abbildung des Fräsprofils bei einem Probe-Werkstück benötigt, wie sie mit der zuvor beschriebenen Vorrichtung bevorzugt mit der Gegenlichtquelle 15 erhalten werden kann.

Fig. 3 zeigt in einer grafischen Repräsentation Daten, die zur automatischen Bestimmung der Korrektureinstellung der Bearbeitungsmaschine in der Vorrichtung hinterlegt sind. Diese Daten, die bevorzugt in einer Datenbank abgespeichert sind, betreffen Profile bzw. Schnittkonturen von Werkstücken und Bearbeitungswerkzeugen des mit der Vorrichtung betrachteten Bearbeitungsvorgangs.

Im Einzelnen ist ein gewünschtes Profil 31 des Werkstücks hinterlegt, von dem in Fig. 3 ein Abschnitt dargestellt ist. Das gezeigte Profil 31 stellt beispielhaft eine Seite eines Laminatprofils dar. Neben dem gewünschten Profil 31 des Werkstücks ist eine Schnittkontur 32 eines Bearbeitungswerkzeugs angegeben. Zur Erstellung des gewünschten Profils 31 des Werkstücks ist typischerweise eine Mehrzahl von Bearbeitungsvorgängen mit unterschiedlichen Bearbeitungswerkzeugen notwendig. Entsprechend ist ein Werkzeug nur für einen Teilabschnitt des gewünschten Profils 31 zuständig. Bei dem anmeldungsgemäßen Verfahren wird zunächst dieser Teilabschnitt der Schnittkontur 32, der von dem entsprechenden Bearbeitungswerkzeug erstellt wird, identifiziert. Dieser Teilabschnitt wird nachfolgend Teilkontur 33 genannt.

Im Beispiel der Fig. 3 verläuft die Teilkontur 33 von einem ersten Stützpunkt 34, auch Startpunkt der Teilkontur 33 genannt, zu einem letzten Stützpunkt 35, auch Endpunkt der Teilkontur 33 genannt. Entlang der Teilkontur 33 werden weitere Stützpunkte 36 in regelmäßigen Abständen angeordnet. Die Anzahl der Stützpunkte 34 bis 36 kann dabei im Bereich von einigen zehn bis einigen hundert Stützpunkten liegen, in der Fig. 3 ist der Übersichtlichkeit halber eine kleinere Anzahl von Stützpunkten 34 bis 36 dargestellt. Die Stützpunkte werden relativ zu einem festgelegten Koordinatensystem-Ursprung 30 bestimmt. Als ein Koordinatensystem-Ursprung 30 wird dabei bevorzugt ein markanter Punkt des gewünschten Profils 31 ausgewählt, vorliegend die nach links gewandte äußere Kante an der Unterseite des gewünschten Profils 31. Mit dieser Unterseite liegt das Werkstück üblicherweise an einer in ihrer Position festliegenden Anlagekante, beispielsweise der Klemmbacke 3, des Probentischs 2 der anmeldungsgemäßen Vorrichtung auf. Die Richtung der Anlagekante legt auch eine erste Koordinatenrichtung x fest; eine zweite Koordinatenrichtung y verläuft senkrecht zur Anlagekante.

In der erwähnten Datenbank sind in gleicher Weise wie dies in Fig. 3 für ein Bearbeitungswerkzeug gezeigt ist auch die Schnittkonturen weiterer Bearbeitungswerkzeuge bzw. die von diesen für das gewünschte Profil 31 relevanten Teilkonturen 33 abgespeichert.

Fig. 4 zeigt in gleicher Weise wie Fig. 3 die Schnittkontur 32 des betrachteten Bearbeitungswerkzeugs sowie die davon relevante Teilkontur 33 mit den Stützpunkten 34 bis 36.

Anstelle des gewünschten Profils 31 des Werkstücks ist hier jedoch das von der Kamera 11 aufgenommene Profil 21 eines Probewerkstücks wiedergegeben. Im aufgenommenen Profil 21 wurde die charakteristische Kante an der Unterseite des Profils mithilfe von Bildverarbeitungsfunktionen identifiziert und wurde auf den Koordinatensystem-Ursprung 30 gelegt.

In Fig. 4 zeigt sich deutlich eine Abweichung des tatsächlichen, aufgenommen Profils 21 von dem gewünschten Profil 31, das, wie Fig. 3 zeigt, entlang der Teilkontur 33 der Schnittkontur 32 des Bearbeitungswerkzeugs verlaufen müsste. Die beobachtete Abweichung gilt es durch Korrekturwerte der Position des Bearbeitungswerkzeugs möglichst zu korrigieren.

In einer Ausgestaltung eines anmeldungsgemäßen Verfahrens werden die Korrekturwerte ermittelt, indem an jedem der Stützpunkte 34 bis 36 bestimmt wird, wie weit das aufgenommene Profil 21 von der Teilkontur 33 entfernt ist. Zu diesem Zweck wird beispielsweise ein Abstand entlang der durch den jeweiligen Stützpunkt 34 bis 36 führenden und senkrecht auf der Teilkontur 33 stehenden Lotlinie gemessen. Für jeden Stützpunkt 34 bis 36 wird dazu z.B. ein Abstand Δx und Δy in x- bzw. y-Richtung ermittelt. Die sich ergebenden Abstände Δx, Δy werden in x- bzw. y-Richtung jeweils über alle Stützpunkte 34 bis 36 aufsummiert. Die jeweilige Summe gibt die in x- bzw. y-Richtung vorzunehmende Korrektur der Position des Bearbeitungswerkzeuges an. Es ist auch möglich, eine Korrektur zunächst in x-Richtung zu bestimmen, diese Korrektur dann auf das aufgenommene Profil 21 anzuwenden, danach eine Verschiebung in y-Richtung auf gleiche Weise zu bestimmen diese wiederum anzuwenden und diesen Vorgang ggf. mehrfach zu wiederholen, bis das aufgenommene Profil 21 sich in seiner Position nicht weiter oder in jedem Schritt nur sehr geringfügig verändert. Die insgesamt vorgenommene Verschiebung gibt dann die notwendigen Korrekturwerte für die Werkzeugposition an.

In weiteren Ausgestaltungen des Verfahrens kann vorgesehen sein, neben einer Translation des Bearbeitungswerkzeuges auch eine mögliche Verkippung zu bestimmen, um eine optimale Anpassung des aufgenommenen Profils 21 an die Teilkontur 33 zu erzielen. Der beschriebene Vorgang kann sodann sukzessiv für verschiedene am Fräsvorgang beteiligte Bearbeitungswerkzeuge erfolgen.

### Bezugszeichenliste

- 1: Grundplatte
- 2: Probentisch
- 3, 3a, 3b: Klemmbacken
- 4: Säule
- 5: Streben
- 6: Vertikalführung
- 7: Schlitten
- 8: Motor
- 9: Endschalter
- 10: Ausleger
- 11: Kamera
- 12: Objektiv
- 13: Trichter
- 14: Auflichtquelle
- 15: Gegenlichtquelle
- 16: Steuereinrichtung

- 20: Bildschirm
- 21: aufgenommenes Profil
- 22, 23: Silhouette des Bearbeitungswerkzeug

- 30: Koordinatensystem-Ursprung
- 31: gewünschtes Profils des Werkstücks
- 32: Schnittkontur des Bearbeitungswerkzeugs
- 33: Teilkontur
- 34-36: Stützpunkt der Teilkontur

- x, y: Koordinate
- Δx, Δy: Abweichung

## Patentansprüche

1. Vorrichtung zur Abbildung und Überprüfung eines Fräsprofils, aufweisend
- eine Probenaufnahme,
- eine Kamera (11), angeschlossen an einem Bild- und Datenverarbeitungssystem und
- eine Beleuchtungseinrichtung,
wobei die Beleuchtungseinrichtung eine von der Probenaufnahme aus betrachtet auf Seiten der Kamera angeordnete Auflichtquelle (14) und eine von der Probenaufnahme aus betrachtet der Kamera (11) gegenüberliegende Gegenlichtquelle (15) umfasst, **dadurch gekennzeichnet, dass** die Auflichtquelle (14) eine Weißlichtquelle und die Gegenlichtquelle (15) eine monochromatische Lichtquelle ist.

2. Vorrichtung nach Anspruch 1, bei der die Auflichtquelle (14) ringförmig um oder im Bereich vor einem Objektiv (12) der Kamera (11) angeordnet ist.

3. Vorrichtung nach einem der vorhergehenden Ansprüche, bei der die Gegenlichtquelle (15) eine flache unterhalb der Probenaufnahme angeordnete Mattscheibe umfasst.

4. Vorrichtung nach einem der vorhergehenden Ansprüche, bei der das Bild- und Datenverarbeitungssystem eine Datenbank mit abgespeicherten Profilen von Bearbeitungswerkzeugen umfasst, wobei auf einem Bildschirm (20) aus den Profilen bestimmte Silhouetten (22, 23) der Bearbeitungswerkzeuge zusammen mit einem von der Kamera (11) aufgenommenen Profil (21) einer Probe darstellbar sind.

5. Vorrichtung nach Anspruch 4, die dazu eingerichtet ist, dass die auf dem Bildschirm (20) dargestellten Silhouetten (22, 23) manuell von einem Benutzer von einer nominell vorgegebenen Sollposition auf eine gewünschte Position verfahrbar sind.

6. Vorrichtung nach Anspruch 4 oder 5, die dazu eingerichtet ist, dass die auf dem Bildschirm (20) dargestellten Silhouetten (22, 23) manuell von einem Benutzer bezüglich einer nominell vorgegebenen Ausrichtung in eine gewünschte Ausrichtung verdrehbar sind.

7. Vorrichtung nach einem der Ansprüche 4 bis 6, die dazu eingerichtet ist, Unterschiede zwischen der Sollposition und der gewünschten Position und/oder der Sollausrichtung und der gewünschten Ausrichtung eines oder mehrerer der Silhouetten (22, 23) der Bearbeitungswerkzeuge erfasst und ausgegeben werden.

8. Vorrichtung nach Anspruch 4, die dazu eingerichtet ist, dass die auf dem Bildschirm (20) dargestellten Silhouetten (22, 23) automatisch von einer nominell vorgegebenen Sollposition auf eine gewünschte Position verfahren werden, wobei die gewünschte Position aus einem Vergleich eines vorgegebenen gewünschten Profils (31) für das Werkstück mit einer vorgegebenen Schnittkontur (32) eines Bearbeitungswerkzeugs ermittelt wird.

9. Vorrichtung nach einem der vorhergehenden Ansprüche, umfassend eine Autofokussiereinrichtung für die Kamera (11).

10. Vorrichtung nach Anspruch 9, bei der die Autofokussiereinrichtung eine Verschiebevorrichtung zur Verschiebung der Kamera (11) und zur Variation des Abstands der Kamera (11) von der Probenaufnahme umfasst.

11. Vorrichtung nach einem der vorhergehenden Ansprüche, bei der die Probenaufnahme Klemmbacken (3, 3a, 3b) aufweist.

12. Verfahren zum Bestimmen von Korrekturwerten für Werkzeugpositionen eines Fräsvorgangs eines Werkstücks, durchgeführt mit einer Vorrichtung nach einem der Ansprüche 1 bis 11 mit den folgenden Schritten:
- Vorgeben eines gewünschten Profils (31) für das Werkstück;
- Vorgeben einer Schnittkontur (32) eines Bearbeitungswerkzeugs;
- Ermitteln einer Teilkontur (33) des Bearbeitungswerkzeugs, die den von dem Bearbeitungswerkzeug zu bearbeitenden Teil des gewünschten Profils (31) des Werkstücks angibt;
- Erfassen eines Profils (21) einer Fräsprobe;
- Vergleichen des erfassten Profils (21) mit der Teilkontur (33) des Bearbeitungswerkzeugs und
- Bestimmen von Korrekturwerten für die Werkzeugposition anhand des Vergleichs.

13. Verfahren nach Anspruch 12, bei dem eine vorgegebene Anzahl von Stützpunkten (34, 35, 36) entlang der Teilkontur (33) bestimmt wird und bei dem die Korrekturwerte aus Abweichungen (Δx, Δy) des erfassten Profils (21) von der Teilkontur (33) an den Stützpunkten (34, 35, 36) bestimmt wird.

14. Verfahren nach Anspruch 13, bei dem die Abweichungen (Δx, Δy) an den Stützpunkten (34, 35, 36) in zwei senkrecht zueinander stehende Richtungen (x, y) bestimmt wird, wobei die Korrekturwerte durch Mittelwerte der Abweichungen (Δx, Δy) gebildet werden.

## Claims

1. Apparatus for imaging and examining a milled profile, having
- a sample holder,
- a camera (11), connected to an image and data processing system, and
- an illumination device,
wherein the illumination device comprises an incident-light source (14) that is arranged, as seen from the sample holder, on the side of the camera and a backlight source (15) that is disposed, as seen from the sample holder, opposite the camera (11), **characterized in that** the incident-light source (14) is a white light source and the backlight source (15) is a monochromatic light source.

2. Apparatus according to Claim 1, in which the incident-light source (14) is arranged in the form of a ring about or in the region in front of an objective (12) of the camera (11).

3. Apparatus according to one of the preceding claims, in which the backlight source (15) comprises a flat ground-glass disk arranged below the sample holder.

4. Apparatus according to one of the preceding claims, in which the image and data processing system comprises a database having stored profiles of machining tools, wherein silhouettes (22, 23) of the machining tools, determined from the profiles, can be represented on a screen (20) together with a profile (21) of a sample recorded by the camera (11).

5. Apparatus according to Claim 4, which is adapted such that the silhouettes (22, 23) represented on the screen (20) are displaceable manually by a user from a nominally specified predetermined position to a desired position.

6. Apparatus according to Claim 4 or 5, which is adapted such that the silhouettes (22, 23) represented on the screen (20) are rotatable manually by a user in relation to a nominally specified orientation into a desired orientation.

7. Apparatus according to one of Claims 4 to 6, which is adapted such that differences between the predetermined position and the desired position and/or the predetermined orientation and the desired orientation of one or more of the silhouettes (22, 23) of the machining tools are captured and output.

8. Apparatus according to Claim 4, which is adapted such that the silhouettes (22, 23) represented on the screen (20) are displaced automatically from a nominally specified predetermined position to a desired position, the desired position being ascertained from a comparison between a specified desired profile (31) for the workpiece and a specified cutting contour (32) of a machining tool.

9. Apparatus according to one of the preceding claims, comprising an autofocus device for the camera (11).

10. Apparatus according to Claim 9, in which the autofocus device comprises a displacement apparatus for displacing the camera (11) and for varying the distance from the camera (11) to the sample holder.

11. Apparatus according to one of the preceding claims, in which the sample holder has clamping jaws (3, 3a, 3b).

12. Method for determining correction values for tool positions in a milling operation of a workpiece, carried out using an apparatus according to one of Claims 1 to 11, comprising the following steps:
- specifying a desired profile (31) for the workpiece;
- specifying a cutting contour (32) of a machining tool;
- ascertaining a partial contour (33) of the machining tool that specifies that portion of the desired profile (31) of the workpiece that is to be machined by the machining tool;
- capturing a profile (21) of a milling sample;
- comparing the captured profile (21) with the partial contour (33) of the machining tool, and
- determining correction values for the tool position from the comparison.

13. Method according to Claim 12, in which a specified number of reference points (34, 35, 36) along the partial contour (33) is determined and in which the correction values are determined from deviations (Δx, Δy) of the captured profile (21) from the partial contour (33) at the reference points (34, 35, 36).

14. Method according to Claim 13, in which the deviations (Δx, Δy) at the reference points (34, 35, 36) in two mutually perpendicular directions (x, y) are determined, wherein the correction values are formed by averages of the deviations (Δx, Δy).

## Revendications

1. Dispositif de représentation et de vérification d'un profil de fraisage comprenant :
- un support d'échantillon,
- une caméra (11) reliée à un système de traitement d'images et de données, et
- une installation d'éclairage,
l'installation d'éclairage ayant une source de lumière incidente (14) située du côté de la caméra (11) par rapport au support d'échantillon et une source de lumière opposée (15) à l'opposé de la caméra par rapport au support d'échantillon,
dispositif **caractérisé en ce que**
la source de lumière incidente (14) est une source de lumière blanche et la source de lumière opposée (15) est une source de lumière monochromatique.

2. Dispositif selon la revendication 1,
**caractérisé en ce que**
la source de lumière incidente (14) est de forme annulaire autour ou dans la région devant l'objectif (12) de la caméra (11).

3. Dispositif selon l'une des revendications précédentes,
**caractérisé en ce que**
la source de lumière opposée (15) comprend une plaque plane, mate, installée sous le support d'échantillon.

4. Dispositif selon l'une des revendications précédentes dans lequel le système de traitement d'images et de données comprend une banque de données avec l'enregistrement de profils d'outils d'usinage et sur l'écran (20), on affiche un échantillon formé des profils de silhouettes déterminées (22, 23) de l'outil d'usinage avec le profil (21) de l'échantillon pris par la caméra (11).

5. Dispositif selon la revendication 4,
**caractérisé en ce que**
les silhouettes (22, 23) représentées sur l'écran (20) peuvent être déplacées par l'utilisateur entre une position de consigne nominale prédéfinie et une position souhaitée.

6. Dispositif selon la revendication 4 ou 5,
**caractérisé en ce que**
les silhouettes (22, 23) représentées sur l'écran (20) peuvent être tournées manuellement par l'utilisateur entre une orientation nominale prédéfinie et une orientation souhaitée.

7. Dispositif selon l'une des revendications 4 à 6,
**caractérisé en ce que**
l'on saisit et l'on émet les différences entre la position de consigne et la position souhaitée et/ou l'orientation de consigne et l'orientation souhaitée d'une ou plusieurs silhouettes (22, 23) de l'outil d'usinage.

8. Dispositif selon la revendication 4 conçu pour déplacer les silhouettes (22, 23) représentées sur l'écran (20), automatiquement d'une position de consigne prédéfinie, nominale, dans une position souhaitée, la position souhaitée se déterminant par la comparaison d'un profil souhaité prédéfini (31) pour la pièce et le contour de coupe prédéfini (32) de l'outil d'usinage.

9. Dispositif selon l'une des revendications précédentes comprenant une installation de mise au point automatique de la caméra (11).

10. Dispositif selon la revendication 9,
**caractérisé en ce que**
l'installation de mise au point automatique comporte un dispositif de translation pour déplacer la caméra (11) et pour modifier la distance entre la caméra (11) et le support d'échantillon.

11. Dispositif selon l'une des revendications précédentes,
**caractérisé en ce que**
le support d'échantillon comporte des mors (3, 3a, 3b).

12. Procédé pour déterminer des valeurs de correction pour des positions d'outil lors d'un processus de fraisage effectué à l'aide d'un dispositif selon l'une des revendications 1 à 11 et comprenant les étapes suivantes consistant à :
- prédéfinir un profil souhaité (31) pour la pièce,
- prédéfinir un contour de coupe (32) pour l'outil d'usinage,
- déterminer un contour partiel (33) de l'outil d'usinage qui indique la partie du profil souhaité (31) de la pièce qui doit être travaillée par l'outil d'usinage,
- saisir un profil (21) d'un échantillon de fraise,
- comparer le profil saisi (21) avec le contour partiel (33) de l'outil d'usinage, et
- déterminer des valeurs de correction pour la position de l'outil à l'aide de la comparaison.

13. Procédé selon la revendication 12 selon lequel on détermine un nombre donné de points d'appui (34, 35, 36) le long du contour partiel (33) et selon lequel on détermine les valeurs de correction à partir des écarts (Δx, Δy) entre le profil saisi (21) et le contour partiel (33) au niveau des points d'appui (34, 35, 36).

14. Procédé selon la revendication 13 selon lequel on détermine les écarts (Δx, Δy) au niveau des points d'appui (34, 35, 36) dans deux directions (x, y) perpendiculaires, les valeurs de correction étant formées par des valeurs moyennes des écarts (Δx, Δy).
